# EUROPÄISCHE PATENTSCHRIFT

(11) **EP 0 704 733 B1**
(45) Veröffentlichungstag und Bekanntmachung des Hinweises auf die Patenterteilung: **30.09.1998**
(21) Anmeldenummer: 95106584.6
(22) Anmeldetag: 02.05.1995
(51) Int. Cl.: G02B 6/44

(54) **Verfahren und Einrichtung zur Herstellung einer Längswasserdichtung für Kabel**
Method and device for manufacturing of longitudinally watertight seal for cable
Procédé et dispositif de fabrication d'etanchéité longitudinale à l'eau pour un câble

(30) Priorität: 23.09.1994 CH 2894/94
(43) Veröffentlichungstag der Anmeldung: 03.04.1996
(73) Patentinhaber: Bandfabrik Streiff AG, CH-6460 Altdorf UR (CH)
(72) Erfinder: Eschweiler, Hubert, CH-6004 Luzern (CH); Gisler, Adalbert, CH-6460 Altdorf (CH)
(74) Vertreter: OK pat AG

(56) Entgegenhaltungen:
- EP-A- 0 243 275
- EP-A- 0 351 100
- EP-A- 0 581 670
- EP-A- 0 666 243
- EP-A- 0 685 855
- US-A- 5 000 539

## Beschreibung

Die Erfindung betrifft ein Verfahren und eine Einrichtung zur Herstellung einer Längswasserdichtung für Kabel.

Bei Kabeln für die Übertragung von elektrischer Energie oder für die Übertragung von Informationen kann im Falle der Beschädigung des Kabelmantels Wasser eindringen und sich in Kabellängsrichtung ausbreiten. Das kann in der Folge zur Verschlechterung der Übertragungseigenschaften, der mechanischen Festigkeit und der Lebensdauer führen. Um die Weiterleitung von eingedrungenem Wasser bzw. Feuchtigkeit zu verhindern, werden als Dichtungsmittel bei Wasserzutritt quellfähige Stoffe wie beispielsweise Kunststoff-Gele oder aus faserartigem Material bestehendes Quellpulver verwendet. Hierbei kann das Dichtungsmittel zwischen der Ummantelung und der Kabelseele oder auch wie z.B. bei Kabel mit Lichtwellenleitern gemäss den Druckschriften **DE-OS 42 19 607** und **EP A 0 261 000** zwischen den einzelnen Leitern des Kabels angeordnet werden.

Mit der deutschen Offenlegungsschrift **DE 29 47 082** ist ein feuchtigkeitsgeschütztes elektrisches Energiekabel bekannt geworden, bei welchem zwischen dem Aussenmantel und der Kabelseele eine Abschirmung vorgesehen ist. Die Abschirmung besteht aus Drähten, die durch eine Umseilvorrichtung aufgebracht und durch eine Bebänderung gehalten werden. In den Lücken zwischen den Drähten sind Stränge aus Kunststoff-Gel angeordnet, die ebenfalls durch eine Umseilung aufgebracht sind. Über den Drähten und den Strängen aus Kunststoff-Gel befindet sich der aufextrudierte Aussenmantel. Bei Feuchtigkeitszutritt füllen die Stränge aufgrund der Quellfähigkeit der Kunststoff-Gele die Lücken der Abschirmung so aus, dass eine Fortleitung von Feuchtigkeit in Kabellängsrichtung unterbunden wird. Diese Art von Längswasserdichtung kann nur bei Kabeln angewendet werden, die wie vorstehend beschrieben Abschirmungsdrähte oder andere Stützglieder für die Stränge aus Kunststoff-Gel aufweisen. Ein weiterer Nachteil liegt darin, dass die geringe Festigkeit der Stränge bei der Montage zu gewissen Schwierigkeiten führen kann.

Der Erfindung liegt die Aufgabe zugrunde ein Verfahren und eine Einrichtung zur Herstellung einer Längswasserdichtung für Kabel vorzuschlagen, die vorstehend erwähnte Nachteile nicht aufweisen.

Diese Aufgabe wird durch die in den Patentansprüchen 1 und 6 angegebene Erfindung gelöst. Hierbei wird eine von einer Vorratsspule ablaufender Glasfaseranordnung zu einem Glasroving verdrillt, der anschliessend durch ein Beschichtungsbad geführt wird. Im Beschichtungsbad wird der Glasroving in eine Emulsion getaucht und danach durch eine Düse gezogen, wobei ein genau definierter Emulsionsauftrag erzeugt wird. Sodann durchläuft der Glasroving eine Trockenkammer und wird anschliessend bei getrockneter Emulsion auf einer Spule aufgewickelt.

In einer bevorzugten Ausführungsform beträgt die Verdrillung des Glasrovings 15 Umdrehungen/m. Die chemische Zusammensetzung der vorzugsweise verwendeten Emulsion ist wie folgt charakterisiert: Terpolymer aus Acrylamid, carboxyl- und sulfogruppenhaltigen Monomeren als W/O-Emulsion in paraffinischen Kohlenwasserstoffen, Natriumsalz.

Die mit der Erfindung erzielten Vorteile sind darin zu sehen, dass bei relativ einfachem Aufbau der Einrichtung und hoher Fertigungsgeschwindigkeit kostengünstige Längswasserdichtungen in Form von beschichteten Glasrovings herstellbar sind. Die Verdrillung erleichtert die Weiterverarbeitung des Glasrovings, der nach seiner Fertigstellung eine sehr gute Biegefähigkeit aufweist, so dass er sich gut aufwickeln lässt und bis zur Endmontage zwischengelagert werden kann. Die vorgeschlagene Emulsion bewirkt, dass die Glasrovings bei Feuchtigkeitszutritt aufquellen, so dass bei berührungsdichter Anordnung derselben in Kabellängsrichtung zwischen dem Aussenmantel und der Kabelseele eine sehr gute Längswasserdichtheit erreicht wird. Mit dieser Anordnung kann ausserdem ein Zugentlastung erzielt werden, was vor allem bei Kabeln mit Lichtwellenleitern wichtig ist. Ein weiterer Vorteil ist darin zu sehen, dass bei der Handhabung des Glasrovings empfindliche Haut durch den Emulsionsauftrag vor freiwerdenden Glasfibrillen geschützt wird. Durch das gemäss Unteranspruch vorgeschlagene Zusammenbinden mehrerer Glasrovings wird eine Erhöhung der Festigkeit und eine Verbesserung der Weiterverarbeitung erzielt.

Im folgenden wird die Erfindung anhand eines Ausführungsbeispieles in Verbindung mit der Zeichnung näher erläutert. Es zeigen:
- **Fig. 1**: eine schematische Darstellung der Einrichtung zur Herstellung von Längswasserdichtungen für Kabel und
- **Fig.2**: eine perspektivische Darstellung eines Energieübertragungskabels mit den erfindungsgemässen Längswasserdichtungen.

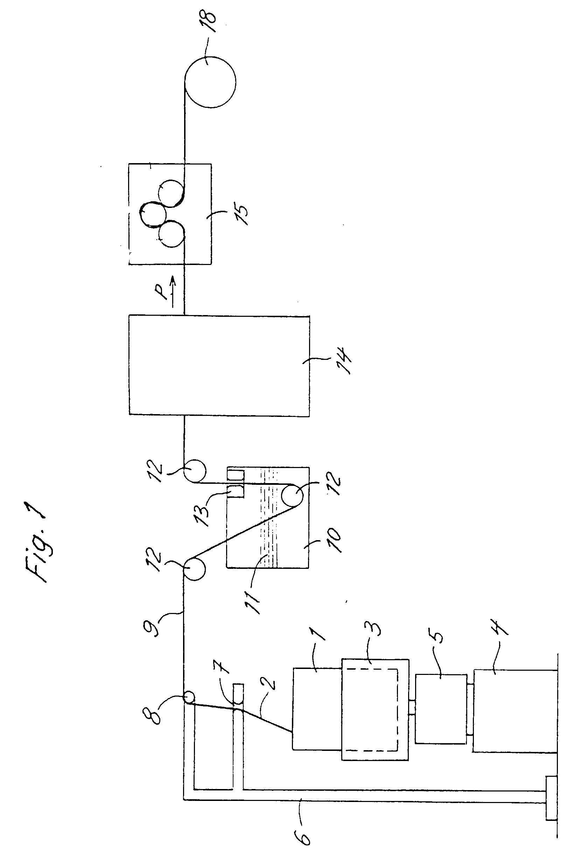

In der **Fig.1** ist mit **1** eine Vorratsspule bezeichnet, die mit zu bandartigen Bündeln zusammengefassten Glasfaseranordnungen **2** bewickelt ist. Die Vorratsspule **1** ist in einem Dralltopf **3** befestigt, der mittels eines Motors **4** und eines stufenlos regulierbaren Getriebes **5** angetrieben wird. Die Glasfaseranordnungen **2** werden über eine in einem Träger **6** befindliche Führungsöffnung **7** und eine am Träger **6** angeordnete Umlenkung **8** geführt. Bei Drehung des Dralltopfes **3** werden die Glasfaseranordnungen **2** zu einem Glasroving **9** verdrillt, wobei beispielsweise bei einer Drehzahl von 360 n/min und einer Abzugsgeschwindigkeit der Glasfasern von 24 m/min eine Verdrillung von **15** Umdrehungen/m erzeugt wird. Der Glasroving **9** wird danach einem Beschichtungsbad **10** zugeführt und in eine Emulsion **11** getaucht, wobei der Glasroving **9** über Rollen **12** läuft und die Verweildauer im Beschichtungsbad **10** durch die Abzugsgeschwindigkeit bestimmt ist. Die chemische Zusammensetzung der vorzugsweise verwendeten Emulsion ist wie folgt charakterisiert:
- Terpolymer aus Acrylamid, carboxyl- und sulfogruppenhaltigen Monomeren als W/O-Emulsion in paraffinischen Kohlenwasserstoffen, Natriumsalz.

Anschliessend wird der Glasroving **9** durch eine Düse **13** gezogen, wobei ein genau definierter, durch den Durchmesser der Düsenöffnung bestimmter Emulsionsauftrag erzeugt wird. Hierbei ist die Düse **13** bei senkrecht verlaufender Düsenöffnung am oberen Rand des Beschichtungsbades **10** angeordnet. Am Boden des Beschichtungsbades **10** ist eine Rolle **12** für die Umlenkung des Glasrovings **9** derart angeordnet, dass der Glasroving **9** in senkrechter Richtung verlaufend durch die Düse **13** gezogen wird.

Danach durchläuft der Glasroving **9** eine Trockenkammer **14**, die z.B. zwei Heissluftgebläse aufweist, welche eine Temperatur von ca. 220° C erzeugen. Die Verweildauer des Glasrovings **9** in der Trockenkammer **14** hängt ebenfalls von der Abzugsgeschwindigkeit ab. Die Abzugsgeschwindigkeit wird von einer in Fertigungsrichtung (Pfeil P) hinter der Trockenkammer **14** angeordneten Abzugsvorichtung **15** erzeugt, aie beispielsweise von einem stufenlos regulierbaren Gleichstrommotor angetrieben wird. Nach der Trocknung wird der Glasroving **9** in Kreuzwicklung auf einer zylindrischen Spule **18** aufgewickelt, die wie nicht weiter beschrieben angetrieben wird.

Es ist auch möglich zwei oder mehr beschichtete Glasrovings **9** mit thermoplastischem Kunststoffgarn zu einer Kordel zusammenzubinden, welche auch als Längswasserdichtung verwendet werden können.

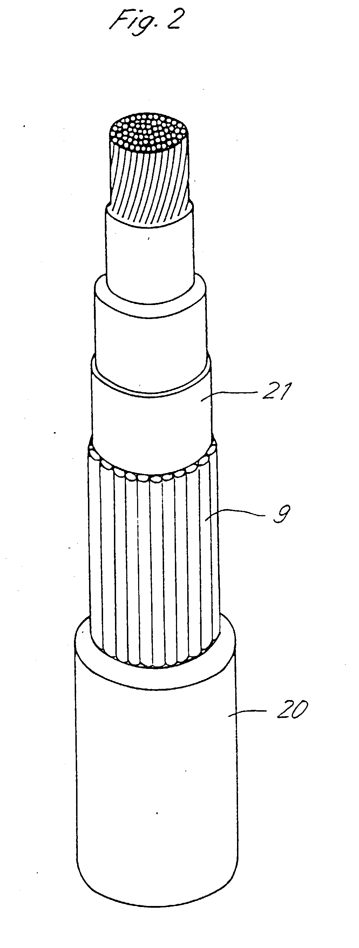

Gemäss **Fig.2** sind zwischen dem Aussenmantel **20** und der nicht näher beschriebenen Kabelseele **21** eines beispielsweise der Energieübertragung dienenden Kabels Längswasserdichtungen in Form von Glasrovings **9** angeordnet. Die Glasrovings **9** erstrecken sich in Kabellängsrichtung und sind berührungsdicht aneinandergereiht. Bei Beschädigung des Aussenmantels **20** und Eindringen von Wasser bzw. Feuchtigkeit bewirkt der auf die Feuchtigkeit reagierende Emulsionsauftrag dass die Glasrovings **9** aufquellen, so dass die Ausbreitung des Wassers bzw. der Feuchtigkeit in Kabellängsrichtung verhindert wird.

## Patentansprüche

1. Verfahren zur Herstellung einer Längswasserdichtung für Kabel, **dadurch gekennzeichnet,**
- dass von einer Vorratsspule (**1**) ablaufende Glasfaseranordnungen (**2**) zu einem Glasroving (**9**) verdrillt werden,
- dass der Glasroving (**9**) in eine Emulsion (**11**) getaucht wird, die bewirkt, daß die Glasroving bei Feuchtigkeitszutritt aufquellen,
- dass der Glasroving (**9**) anschliessend durch eine Düse (**13**) gezogen wird, wobei ein genau definierter Emulsionsauftrag erzeugt wird,
- dass der mit der Emulsion (**11**) benetzte Glasroving (**9**) getrocknet wird, und
- dass der getrocknete Glasroving (**9**) auf einer Spule (**18**) aufgewickelt wird.

2. Verfahren nach Anspruch **1**,
**dadurch gekennzeichnet,**
- dass die Verdrillung des Glasrovings (**9**) 15 Umdrehungen/m beträgt.

3. Verfahren nach Anspruch **1**,
**dadurch gekennzeichnet,**
- dass eine Emulsion (**11**) folgender chemischer Charakterisierung verwendet wird: Terpolymer aus Acrylamid, carboxyl- und sulfogruppenhaltigen Monomeren als W/O-Emulsion in paraffinischen Kohlenwasserstoffen, Natriumsalz.

4. Verfahren nach Anspruch **1**,
**dadurch gekennzeichnet,**
- dass der genau definierte Emulsionsauftrag durch den Durchmesser der Düsenöffnung der Düse (**13**) bestimmt wird.

5. Verfahren nach Anspruch **1**,
**dadurch gekennzeichnet,**
- dass mindestens zwei Glasrovings (**9**) zu einer Kordel bzw. zu einer Längswasserdichtung zusammengebunden werden.

6. Einrichtung zur Durchführung des Verfahrens nach Anspruch 1,
**dadurch gekennzeichnet,**
- dass ein Dralltopf (**3**) vorgesehen ist, in welchem eine Vorratsspule (**1**) befestigt ist,
- dass der Dralltopf (**3**) mittels eines Motors (**4**) und eines Getriebes (**5**) angetrieben ist,
- dass ein mit einer Emulsion (**11**) gefülltes Beschichtungsbad (**10**) vorgesehen ist,
- dass in Fertigungsrichtung nach dem Beschichtungsbad (**10**) eine Düse (**13**) vorgesehen ist, durch die das berchichtete Glas roving gezogen wrid,
- dass eine Trockenkammer (**14**) mit mindestens einem Heissluftgebläse vorgesehen ist,
- dass eine in Fertigungsrichtung hinter der Trockenkammer (**14**) angeordnete Abzugsvorrichtung (**15**) vorgesehen ist, mittels welcher der Glasroving (**9**) von der Vorratsspule (**1**) durch das Beschichtungsbad (**10**) und die Trockenkammer (**14**) ziehbar ist, und
- dass eine angetriebene Spule (**18**) für die Aufwicklung des Glasrovings (**9**) vorgesehen ist.

7. Einrichtung nach Anspruch **6**,
**dadurch gekennzeichnet,**
- dass über dem Dralltopf (**3**) eine in einem Träger (**6**) befindliche Führungsöffnung (**7**) und eine am Träger (**6**) angeordnete Umlenkung (**8**) vorgesehen sind, durch welche die Glasfaseranordnung (**2**) geführt bzw. umgelenkt werden.

8. Einrichtung nach Anspruch **6**,
**dadurch gekennzeichnet,**
- dass die Düse (**13**) bei senkrecht verlaufender Düsenöffnung am oberen Rand des Beschichtungsbades (**10**) angeordnet ist und dass am Boden des Beschichtungsbades (**10**) eine Rolle (**12**) für die Umlenkung des Glasrovings (**9**) derart angeordnet ist, dass der Glasroving (**9**) in senkrechter Richtung verlaufend durch die Düse (**13**) gezogen wird.

9. Einrichtung nach einem der Ansprüche **6** bis **8**,
**dadurch gekennzeichnet,**
- dass das Getriebe (**5**) stufenlos regulierbar ist.

## Claims

1. A method of producing a longitudinal watertight seal for cables,
characterised in that
- glass fibre arrangements (2) running off a supply reel (1) are twisted to form a glass roving (9),
- that the glass roving (9) is immersed in an emulsion (11) which causes the glass roving to swell on the ingress of moisture,
- that the glass roving (9) is subsequently pulled through a nozzle (13), wherein an accurately defined deposit of emulsion is produced,
- that the glass roving (9) which is wetted with the emulsion (11) is dried, and
- that the dried glass roving (9) is wound up on a spool (18).

2. A method according to claim 1,
characterised in that
- the twisting of the glass roving (9) amounts to 15 turns/m.

3. A method according to claim 1,
characterised in that
- an emulsion (11) of the following chemical characterisation is used: the sodium salt of a terpolymer of acrylamide and of monomers containing carboxyl and sulpho groups as a W/O emulsion in paraffin hydrocarbons.

4. A method according to claim 1,
characterised in that
- the accurately defined deposit of emulsion is determined by the diameter of the nozzle orifice of the nozzle (13).

5. A method according to claim 1,
characterised in that
- at least two glass rovings (9) are bound together to form a cord or to form a longitudinal watertight seal.

6. A device for carrying out the method according to claim 1,
characterised in that
- a spinning pot (3) is provided, in which a supply reel (1) is fixed,
- that the spinning pot (3) is driven by means of a motor (4) and a transmission (5),
- that a coating bath (10) filled with an emulsion (11) is provided,
- that a nozzle (13) is provided behind the coating bath (10) in the direction of production, through which nozzle the coated glass roving is pulled,
- that a drying chamber (14) is provided which comprises at least one hot air blower,
- that a pull-off device (15) is provided, which is disposed behind the drying chamber (14) in the direction of production and by means of which the glass roving (9) can be pulled from the supply reel (1) through the coating bath (10) and the drying chamber (14), and
- that a driven spool (18) is provided for winding up the glass roving (9).

7. A device according to claim 6,
characterised in that
- a guide orifice (7) situated in a support (6) and a deflection means (8) disposed on the support (6), by which the glass fibre arrangement (2) can be guided and deflected, respectively, are provided above the spinning pot (3).

8. A device according to claim 6,
characterised in that
- the nozzle (13) is disposed, with its nozzle orifice extending vertically, at the top edge of the coating bath (10), and that a roller (12) for the deflection of the glass roving (9) is disposed at the bottom of the coating bath (10) in such a way that the glass roving (9) is pulled through the nozzle (13) running in a vertical direction.

9. A device according to any one of claims 6 to 8,
characterised in that
- the transmission (5) is continuously adjustable.

## Revendications

1. Procédé pour établir un étanchéité longitudinale à l'eau pour des câbles, caractérisé en ce
- qu'on torsade des ensembles (2) de fibres de verre, qui sont dévidés d'une bobine débitrice (1), pour former un stratifil de verre (9),
- qu'on immerge le stratifil de verre (9) dans une émulsion (11), qui a pour effet de faire gonfler les stratifils dans le cas d'un apport d'humidité,
- que le stratifil de verre (9) est ensuite tiré à travers une buse (13), auquel cas il se produit un dépôt défini de façon précise de l'émulsion,
- qu'on sèche le stratifil de verre (9) mouillé par l'émulsion (11), et
- qu'on enroule le stratifil de verre séché (9) sur une bobine (18).

2. Procédé selon la revendication 1, caractérisé en ce
- que le torsadage du stratifil de verre (9) est de 15 rotations/m.

3. Procédé selon la revendication 1, caractérisé en ce
- qu'on utilise une émulsion (11) présentant la caractérisation chimique suivante : terpolymère formé d'acrylamide, monomères contenant des groupes carboxyle ou des groupes sulfo, en tant qu'émulsion W/O dans des hydrocarbures paraffiniques, sels de sodium.

4. Procédé selon la revendication 1, caractérisé en ce
- que le dépôt défini de façon précise de l'émulsion est déterminé par le diamètre de l'ouverture de la buse (13).

5. Procédé selon la revendication 1, caractérisé en ce
- qu'on réunit au moins deux stratifils de verre (9) pour former un cordon ou une garniture d'étanchéité longitudinal à l'eau.

6. Dispositif pour la mise en oeuvre du procédé selon la revendication 1, caractérisé en ce
- qu'il est prévu un pot de torsion (3), dans lequel est fixée une bobine débitrice (1),
- que le pot de torsion (3) est entraîné au moyen d'un moteur (4) et d'une transmission (5),
- qu'il est prévu un bain d'enduction (10) rempli par une émulsion (11),
- que dans la direction de fabrication il est prévu, en aval du bain d'enduction (10), une buse (13), à travers laquelle le stratifil de verre enduit est tiré,
- qu'il est prévu une chambre de séchage (14) comportant au moins un ventilateur à air chaud,
- qu'il est prévu un dispositif de tirage (15), qui est disposé en arrière de la chambre de séchage (14) dans la direction de fabrication et au moyen duquel le stratifil de verre (9) peut être tiré de la bobine débitrice (1) à travers le bain d'enduction (10) et la chambre de séchage (14), et
- qu'il est prévu une bobine entraînée (18) pour l'enroulement du stratifil de verre (9).

7. Dispositif selon la revendication 6, caractérisé en ce
- qu'au-dessus du pot de torsion sont prévus une ouverture de guidage (7) située dans un support (6) et un dispositif de renvoi (8) disposé sur le support (6) et au moyen duquel l'ensemble (2) de fibres de verre est guidé ou dévié.

8. Dispositif selon la revendication 6, caractérisé en ce
- que dans le cas où l'ouverture de la buse (13) est verticale, la buse est disposée près du bord supérieur du bain d'enduction (10) et qu'un rouleau (12) servant à dévier le stratifil de verre (9) est diposé près du fond du bain d'enduction (10) de telle sorte que le stratifil de verre (9) est tiré dans une direction verticale à travers la buse (13).

9. Dispositif selon l'une des revendications 6 à 8, caractérisé en ce
- que la transmission (5) peut être réglée progressivement.
